# EUROPEAN PATENT SPECIFICATION

(11) **EP 2 452 958 B1**
(45) Date of publication and mention of the grant of the patent: **17.01.2018**
(21) Application number: 09847145.1
(22) Date of filing: 07.09.2009
(51) Int. Cl.: B01J 23/46, B01J 31/22, C07F 15/00, C08F 4/80, C08F 132/06, C08G 61/08, C08K 5/10, C08K 5/134

(54) **METHOD FOR PRODUCING POLYDICYCLOPENTADIENE AND MATERIALS BASED THEREON**
VERFAHREN ZUR HERSTELLUNG VON POLYDICYCLOPENTADIEN UND DARAUF BASIERENDEN MATERIALIEN
PROCÉDÉ DE PRODUCTION DE POLYDICYCLOPENTADIÈNE ET MATÉRIAUX LE CONTENANT

(30) Priority: 09.07.2009 RU 2009126027
(43) Date of publication of application: 16.05.2012
(73) Proprietor: Limited Liability Company "United Research and Development Centre", Moscow 119333 (RU)
(72) Inventor: YUMASHEVA, Tatyana Modestovna, Respublika Komi (RU); AFANASIEV, Vladimir Vladimirovich, Moskovskaya obl. 142290 (RU); MASLOBOYSCHKOVA, Olga Vasilievna, Moscow 127474 (RU); SHUTKO, Egor Vladimirovich, Moscow 109472 (RU); BESPALOVA, Natalya Borisovna, Moscow 119333 (RU)
(74) Representative: Zacco Sweden AB
(86) International application number: PCT/RU2009/000453
(87) International publication number: WO 2011/005136

(56) References cited:
- EP-A1- 1 757 613
- EP-A1- 2 280 033
- WO-A1-96/20235
- WO-A1-99/60030
- WO-A1-2009/142535
- RU-C2- 2 168 518
- SU-A- 118 976
- US-A1- 2005 261 451

## Description

This invention relates to the chemistry of high molecular weight species, in particular to the technology of producing polydicyclopentadiene and polymer materials based thereon.

There are known ways of producing polydicyclopentadiene via metathesis polymerization with cycle opening in the presence of metal-complex catalysts or catalytic systems based on tungsten, molybdenum and ruthenium compounds (K. J. Ivin , J. C. Mol "Olefin Metathesis and Metathesis Polymerization", Second Edition Academic Press 1997; "Metathesis Polymerization", Advances in Polymer Science, Springer 2005; Grubbs, Robert H. "Handbook of Metathesis" Wiley-VCH, Weinheim 2003). Catalysts based on tungsten and molybdenum compounds are close in properties and have strong unpleasant odor, dark color and that is why are used only for production of technical components.

Currently catalysts based on carbine complexes of ruthenium are widely used for polymerization of cyclo- and bi-cyclo-olefins with ring opening with metathesis. There are methods of preparing polydicyclopentadiene over ruthenium catalysts - carbine complexes with phosphine ligands (Grubbs catalysts of the first generation) characterized by good stability and effectiveness, 5 times superior than tungsten complexes allowing using mole ratio monomer : catalyst up to 15000:1 (WO9960030 & WO9720865). General scheme of polydicyclopentadiene preparation via reaction of metathesis polymerization with ring opening over ruthenium looks like the following:

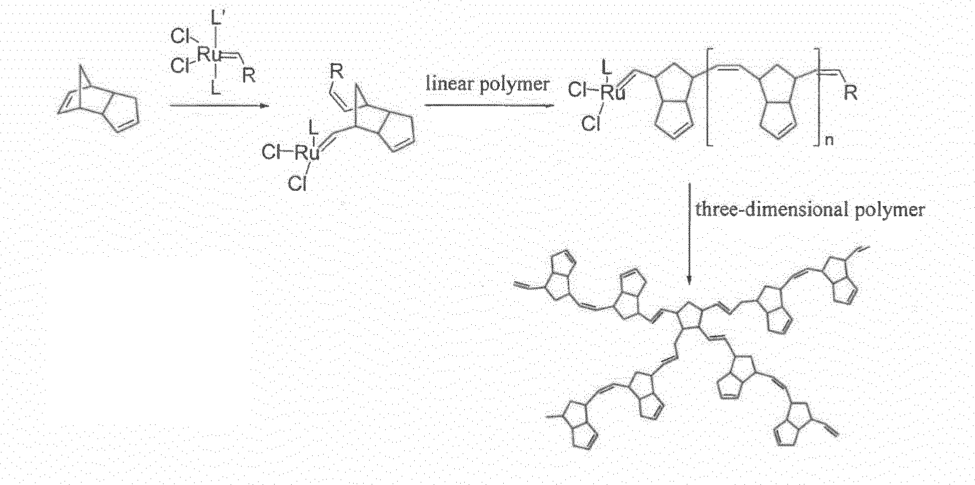

Main disadvantage of the first generation ruthenium catalysts is their low catalytic activity requiring bigger amount of the catalyst, 1:8000 to 1:15000.

Activity of ruthenium catalysts of the second generation is 5 and more time higher than activity of the first generation catalysts, however, ban solubility and high speed of dicyclopentadiene polymerization make difficult these catalysts application. Catalyst, having no time to dissolve in the monomer, is covered with the layer of polymer - encapsulates and losses activity. This results in the necessity to increase the catalysts consumption significantly. Besides, there are technological problems in making articles from polydicyclopentadiene (PDCPD) by injection molding, as it is not possible to control time of polymerization start and the polymer, forming too early, may plug assemblies for monomer and catalyst mixture feed.

The closest technical solution to PDCPD production by this invention is the method of polydicyclopentadiene production over ruthenium catalyst of the second generation with delayed activation and moderate activity (US Patent No. 2005261451).

The main disadvantage of this method is the need to use significant amount of the catalyst - mole ratio of monomer : catalyst to produce PDCPD with satisfactory mechanical properties is 35000:1, besides, the know method does not allow controlling time of the polymerization start, resulting in abnormal technological cycle and inhomogenuity of the product made.

In the process of PDCPD production various modifiers purposefully changing properties of the final product are introduced into dicyclopentadiene.

There is a method of preparing PDCPD-based polymer materials comprising introduction of dicyclopentadiene, catalysts and modifying additives into the reaction mixture (WO9960030).

Insignificant changes of the final products properties and worsening of the reaction conditions due to reduction of the catalyst concentration, requiring in its turn increase of the catalysts amount, should be considered disadvantages of the method.

Technical solution the closest to the technology of PDCPD-based materials production is the method comprising catalyst dissolving in dicyclopentadiene, introduction of modifying additives into the solution, and polymerization of the reaction mass (RF Patent No. 2168518).

Disadvantages of the method are high consumption of the catalyst as modifying additives form mechanical solution in dicyclopentadiene reducing catalytic activity of the catalyst used, as well as insignificant effect of the additives on the properties change related to normal dissolving of the additives in the final product without chemical bonding.

Main disadvantage of the known methods of polydicyclopentadiene and materials based thereon production is the use of outdated catalysts with low catalytic activity and without the possibility to control the time of the polymerization start, as well as to involve modifying additives into the reaction.

Task resolved by the invention claimed is creation of an effective method of preparing polydicyclopentadiene and materials based thereon via reaction of metathesis polymerization with opening cycle of monomer - dicyclopentadiene (DCPD), through using series of ruthenium catalysts allowing thermal control of polymerization process start, using small amounts of the catalyst, and effecting process of polymerization with modifiers, such as co-monomers, alkyl-phenols, and esters of dibasic carboxylic acids.

Technical result consists of ensuring possibility of controlling time of polymerization start, reducing catalyst consumption, target improvement of physical and mechanical properties of the finished product, and possibility of polymerization in air, but not in inert gas medium.

The task set and the technical result are achieved through applying compound with the following general formula as the catalyst: 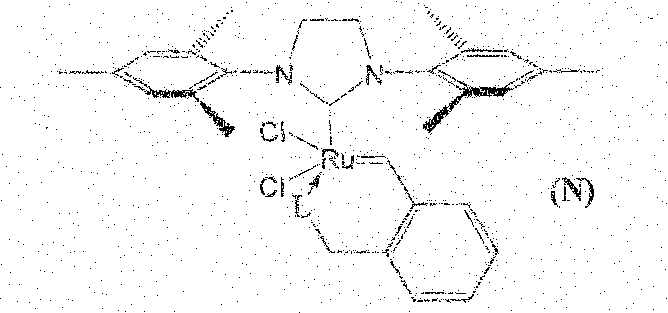 where L is substituent selected from the following group: 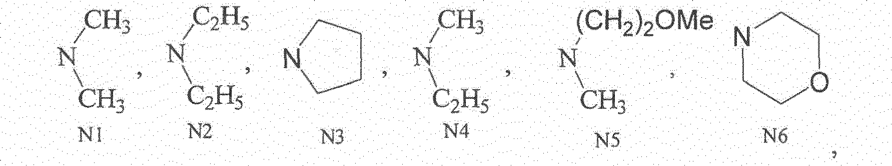 with dicyclopentadiene mixed with the catalyst at mole ratios of the catalyst and DCPD of 1:70000 to 1:1000000, and polymerization is carried out by reaction mixture heating from 30°C up to 200°C, as well as by introducing modifiers into the solution before polymerization to prepare polymer materials based on polydicyclopentadiene, with such modifiers being one or combination of several cyclo-olefin co-monomers selected from the group: cyclo-pentane, cyclo-octene, cyclo-octadiene, norbornene, norbornadiene, in the amount of 5-50 wt.% of each in ratio to dicyclopentadiene. 5-65 wt.% of dicyclopentadiene of cyclopentadiene oligomers are also used as modifiers in the form of trimers and tetramers mixture, besides esters of dibasic carboxylic acids are used as modifiers, primarily, dibutylphthalate and dioctylphthalate in the amount of 5-25 wt.% of dicyclopentadiene, along with this alkyl-phenols selected from group: pentaerythritol tetrakis- (3,5-di-tert-butyl-4-hydroxy-cinnamate, 4,4-methylene bis (2,6- di-tert-butyl-phenol), octadecyl 3-(3,5- di-tert-butyl-4-hydroxyphenyl)propionate are also used as modifiers in the amount of 1-5 wt.% of dicyclopentadiene. There can be a simultaneous introduction of the following combinations selected from the groups used as modifiers: cyclo-olefin and/or cyclo-olefins with alkyl-phenol; cyclo-olefin with an ester of dibasic carboxylic acid and alkyl-phenol; ester of dibasic carboxylic acid with alkyl-phenol, with cyclo-olefin being selected from the group: cyclo-pentane, cyclo-octene, cyclo-octadiene, norbornene, norbornadiene in the amount of 5-50 wt.% of dicyclopentadiene; alkyl-phenol being selected from the group: pentaerythritol tetrakis- (3,5- di-tert-butyl -4- hydroxy-cinnamate, 4,4- methylene bis (2,6- di-tert-butyl-phenol), octadecyl 3-(3,5- di-tert-butyl -4- hydroxy-phenyl)propionate, in the amount of 1-5 wt.% of dicyclopentadiene, and an ester of dibasic carboxylic acid and alkyl-phenol being selected from the group: dibutylphthalate and dioctylphthalate in the amount of 5-25 wt.% of dicyclopentadiene.

Achievement of the technical result to a large extent is conditioned by high solubility of the catalysts in the monomer at room temperature, that is why there is no need in preliminary solution of the catalyst in a solvent, resulting in reduction of the required amount of the catalyst and in improvement of the physical and mechanical indicators of the polymer. Polydicyclopentadiene with high performance properties are prepared at mole ratio monomer : catalyst of 50000 - 750000:1, whereas for the known catalysts this ratio is 30000 - 40000:1 and allows preparing polydicyclopentadiene with the worst properties.

Along with this, combined introduction of a certain combination of joint two and more additional cycloolefin co-monomers at relevant ratios allows achievement of purposefully set unique complex of the resin main characteristics in a wide range of its practical application conditions; namely, allows controlling combination of elastic and viscous character of the material, its strength and hardness, glass transition temperature. This results in achieving unique combinations of impact strength, stiffness, glass transition point, and elongation at break. Additives not only improve resin resistance to oxidation and UV radiation, but notable improve mechanical strength of the material at elongation. Besides they improve optic properties of the materials (decrease of yellowness and increase of light transmission and resistance to UV radiation).

The claimed method of dicyclopentadiene polymerization allows preparing class of new polymer materials with high mechanical properties, thermal and chemical stability at reduced catalyst consumption and thermal control of the polymerization process start.

Effects specified are ensured by specific properties of a catalyst which, at the preset temperature and quantity, activates polymerization of dicyclopentadiene and physical and chemical interaction between the catalyst and the listed modifying additives, forming polydicyclopentadiene with appropriate modifiers as part of the polymer structure. Small amount of the catalysts reduced negative effect of its presence on the physical and chemical properties of the polymers made.

Method of producing polydicyclopentadiene and materials based thereof is realized by heating dicyclopentadiene with catalyst N in mold at 30 to 200°C. Mole ration monomer : catalysts is 1:70000 to 1:1000000. Thermally initiated ruthenium catalysts with the following general formula are used: 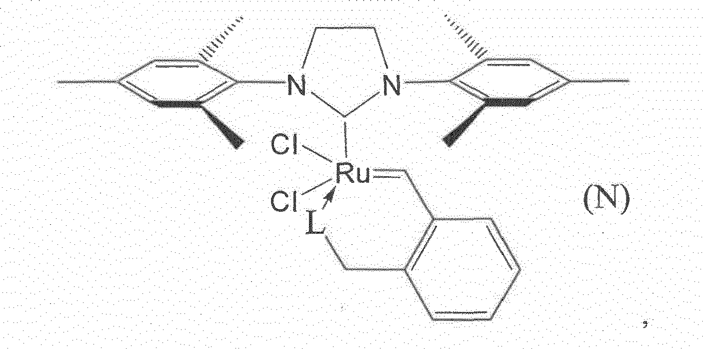 where L is substituent selected from the following group:

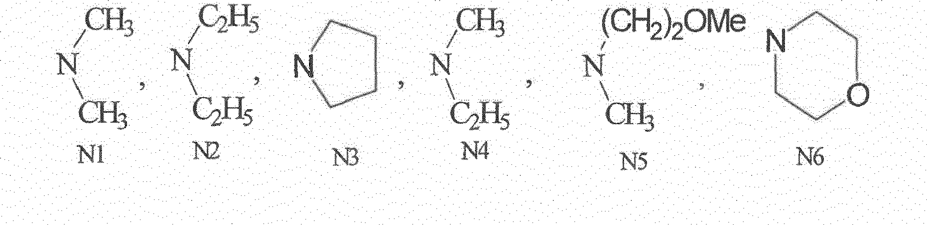

Process of dicyclopentadiene polymerization is implemented by dissolving catalysts **N** in dicyclopentadiene at temperature up to 30°C. To improve physical and mechanical properties of polymers modifying additives are used which are activated by the catalyst and participate in the process of polymerization. Reaction of polymerization is initiated by heating at 30 to 200°C in a mold. The mixture gradually gets thicker and thickening ends in exothermal reaction resulting in hardening/solidification of the composition and product making.

Invention is illustrated the following examples:

### Example 1

Solution of 1.79 mg of catalysts **N1** in 26.44 g of dicyclopentadiene (DCPD) with purity 98% (mole ratio DCPD : catalyst = 70000:1) is put into a mold heated up to 30°C, and temperature is raised up to 80°C. Hard transparent sample of polydicyclopentadiene (PDCPD) without smell is obtained. Glass transition temperature Tg =174°C, modulus of elasticity in flexure =1.83 GPa, coefficient of linear thermal expansion at 60°C =69.2 µM/m°C, tensile yield stress = 53.6 MPa, elongation at break =11%.

### Example 2

Conditions of the reaction are as per Example 1, but mole ratio DCPD : catalyst = 250000:1 is used. Hard transparent sample of polydicyclopentadiene (PDCPD) with light smell is obtained. Glass transition temperature Tg = 124°C, modulus of elasticity in flexure = 1.88 GPa, tensile yield stress = 58.2 MPa.

### Example 3

Conditions of the reaction are as per Example 1, but mole ratio DCPD : catalyst = 1000000: 1 is used with reaction mixture heating up to 200°C. Elastic transparent sample of polydicyclopentadiene (PDCPD) is obtained. Shore hardness =25A.

### Example 4

Conditions of the reaction are as per Example 1, but catalyst N2 is used. Hard transparent sample of polydicyclopentadiene (PDCPD) without smell is obtained. Glass transition temperature Tg =168°C, modulus of elasticity in flexure =1.58 GPa, tensile yield stress = 55.2 MPa.

### Example 5

Conditions of the reaction are as per Example 1, but catalyst **N3** is used. Hard transparent sample of polydicyclopentadiene (PDCPD) without smell is obtained. Glass transition temperature Tg =173°C, modulus of elasticity in flexure =1.68 GPa, coefficient of linear thermal expansion at 60°C =66.0 µM/m°C.

### Example 6

Conditions of the reaction are as per Example 1, but catalyst **N4** is used. Hard transparent sample of PDCPD without smell is obtained. Glass transition temperature Tg =171°C, modulus of elasticity in flexure =1.80 GPa, tensile strength: strain yield = 56.4 MPa, ultimate tensile stress = 43.2 MPa.

### Example 7

Conditions of the reaction are as per Example 6, but mole ratio DCPD : catalyst = 200000:1 is used with reaction mixture heating up to 150°C. Hard transparent sample of PDCPD without smell is obtained.. Glass transition temperature Tg = 144°C, tensile strength: strain yield = 59.3 MPa, ultimate tensile stress =48.1 MPa.

### Example 8

Conditions of the reaction are as per Example 1, but catalyst **N5** is used. Hard transparent sample of PDCPD without smell is obtained. Glass transition temperature Tg =168°C, modulus of elasticity in flexure = 1.80 GPa, coefficient of linear thermal expansion at 60°C =56.0 µM/m°C, tensile yield stress = 58.5 MPa.

### Example 9

Conditions of the reaction are as per Example 8, but mole ratio DCPD : catalyst = 200000:1. Hard transparent sample of PDCPD) without smell is obtained. Glass transition temperature Tg =138°C, modulus of elasticity in flexure = 1.81 GPa.

### Example 10

Conditions of the reaction are as per Example 1, but catalyst **N6** is used and mixture is kept at 30°C without additional heating. Hard transparent sample of PDCPD without smell is obtained. Glass transition temperature Tg =172°C.

### Example 11

Conditions of the reaction are as per Example 1, but additive to dicyclopentadiene (14 wt.%) of cyclopentadiene oligomers in the form of trimers and tetramers mixture is used. Hard transparent sample of PDCPD without smell is obtained. Glass transition temperature Tg =169°C, modulus of elasticity in flexure = 2.12 GPa, coefficient of linear thermal expansion at 60°C =89.2 µM/m°C, tensile yield stress = 55 MPa, notched Izod impact strength = 5.7 KJ/m².

### Example 12

Conditions of the reaction are as per Example 1, but DCPD of 93% purity with additive (65 wt. %) of cyclopentadiene oligomers in the form of trimers and tetramers mixture is used. Hard transparent sample of polydicyclopentadiene (PDCPD) without smell is obtained. Glass transition temperature Tg =133°C, modulus of elasticity in flexure = 2.04 GPa.

### Example 13

Solution of 1.25 mg of catalyst **N1** and 0.66 g (2.5 wt.%) of pentaerythritol tetrakis(3,5-di-tert-butyl-4-hydroxycinnamate) in 26.44 g of DCPD (mole ration DCPD : catalyst = 100000:1) is put into a mold, heated up to 30°C, and temperature is raised up to 100°C. Hard transparent sample of polydicyclopentadiene (PDCPD) without smell is obtained. Glass transition temperature Tg =162°C, modulus of elasticity in flexure = 1.72 GPa, tensile strength: strain yield = 58.3 MPa, ultimate tensile stress =50.5 MPa, elongation at break =105%. notched Izod impact strength = 4.7 KJ/m², Shore hardness D84.

### Example 14

Conditions of the reaction are as per Example 13, but 4,4'-methylenebis (2,6-di-tert-butyl-phenol) (5 wt.% of DCPD) is used. Hard transparent sample of PDCPD without smell is obtained. Glass transition temperature Tg =152°C, elongation at break =90%.

### Example 15

Conditions of the reaction are as per Example 13, but octadecyl 3-(3,5- di-tert-butyl -4-hydroxyphenyl)propionate (1 wt.% of DCPD) is used. Hard transparent sample of PDCPD without smell is obtained. Glass transition temperature Tg =158°C, elongation at break =60%.

### Example 16

Conditions of the reaction are as per Example 13, but additive of dioctylphthalate (15 wt.% of DCPD) is used. Hard transparent sample of PDCPD without smell is obtained. Optic characteristics: light transmission = 93.6%, yellowness index =10.3%.

### Example 17

Conditions of the reaction are as per Example 13, but additive of dioctylphthalate (7 wt.% of DCPD) is used. Hard transparent colorless sample of PDCPD without smell is obtained. Optic characteristics: light transmission = 93.1%, yellowness index =12.0%.

### Example 18

Conditions of the reaction are as per Example 17, but dibutylphthalate (25 wt.% of DCPD) is used. Hard transparent colorless sample of PDCPD without smell is obtained. Optic characteristics: light transmission =92.3%, yellowness index =8.5 %.

### Example 19

Conditions of the reaction are as per Example 13, but additive of dicyclopentene (5 wt.% of DCPD) is used. Hard transparent sample of PDCPD without smell is obtained. Glass transition temperature Tg =128°C, modulus of elasticity in flexure = 2.25 GPa.

### Example 20

Conditions of the reaction are as per Example 13, but additive of cyclooctane (5 wt.% of DCPD) is used in the absence of alkylphenol. Hard transparent sample of PDCPD without smell is obtained. Glass transition temperature Tg =121°C, modulus of elasticity in flexure = 2.13 GPa, ultimate tensile strength = 53.2 MPa.

### Example 21

Conditions of the reaction are as per Example 13, but additive of norbornene (25 wt.% of DCPD) is used. Hard transparent sample of PDCPD without smell is obtained. Glass transition temperature Tg =133°C, modulus of elasticity in flexure = 1.71 GPa, ultimate tensile strength = 55.0 MPa, elongation at break = 133%.

### Example 22

Conditions of the reaction are as per Example 13, but additive of cyclooctadiene (20 wt.% of DCPD) is used. Hard transparent sample of PDCPD without smell is obtained. Modulus of elasticity in shear = 1.13 GPa, elongation at break = 205%. Shore hardness = A61.

### Example 23

Conditions of the reaction are as per Example 13, but additive of norbornadiene (20 wt.% of DCPD) is used. Hard transparent sample of PDCPD without smell is obtained. Glass transition temperature Tg =135°C, ultimate tensile strength = 51.6 MPa.

### Example 24

Conditions of the reaction are as per Example 13, but additives of cyclooctadiene and cyclooctane (20 wt.% of DCPD each) are used. Transparent sample of PDCPD without smell is obtained. Notched Izod impact strength = 7.1 KJ/m², Shore hardness = D70. Extension without break to percent elongations = 250%.

### Example 25

Conditions of the reaction are as per Example 13, but additives of cyclooctadiene and cyclooctane (50 wt.% of DCPD each) are used. Transparent sample of PDCPD is obtained. Shore hardness = A29.

### Example 26

Conditions of the reaction are as per Example 13, but additives of norbornadiene and cyclooctane (wt.% of DCPD each) are used. Transparent sample of PDCPD is obtained. Glass transition temperature Tg =111°C, modulus of elasticity in flexure = 1.58 GPa, tensile yield stress = 50.9 MPa, elongation at break= 150%. Shore hardness = D79.

### Example 27

Conditions of the reaction are as per Example 13, but additives of norbornene and dioctylphthalate (20 and 10 of DCPD, respectively) are used. Transparent sample of PDCPD is obtained. Glass transition temperature Tg = 86°C, modulus of elasticity in flexure = 1.75 GPa, tensile yield stress = 48.8 MPa, elongation = 150%. Shore hardness = D81.5.

As the above examples show polydicyclopentadiene and various polymer materials based thereof prepared by the proposed method possess high physical and mechanical properties significantly superior over the characteristics of the similar materials produced via known technologies.

These characteristics of the new PDCPD-based materials prepared by the new method stand out for the unique combination of mechanical properties - high hardness and at the same tome high impact strength making these materials impact resistance. Absence of smell, high optical purity, and improved mechanical properties significantly expand range of these materials application. Possibility of making large and very large articles of preset complex form is attracting. Not unimportant is the fact that in combustion no dioxins or other toxic matters are generated (carbon dioxide and water are products of combustion), that along with good organoleptic properties makes these materials environmentally safe.

## Claims

1. Method of preparing polymer materials based on polydicyclopentadiene including solution of a catalyst in dicyclopentadiene, introduction of modifying additives into the solution, and polymerization of the reaction mixture, wherein compounds with the following general formula are used as the catalyst: 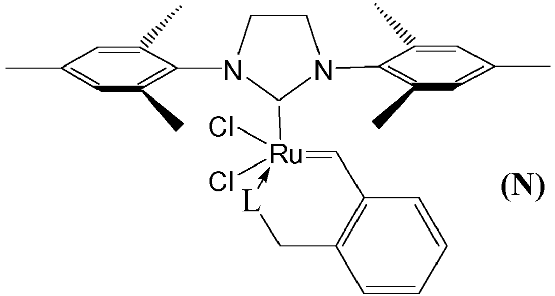 where L is substituent selected from the following group: 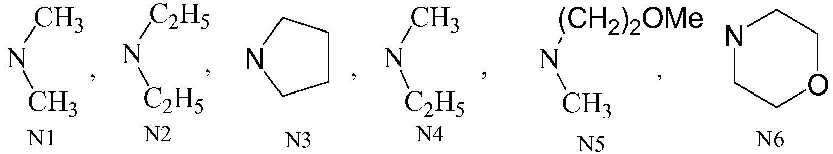 with dicyclopentadiene mixed with the catalysts at catalyst/dicyclopentadiene mole ratios of 1:70000 to 1:1000000, and polymerization is carried out by heating reaction mixture from 30°C up to 200°C, with modifying additives being one or combination of several cyclo-olefin co-monomers selected from the group: cyclo-pentene, cyclo-octene, cyclo-octadiene, norbornene, norbornadiene, in the amount of 5-50 wt.% of modifying additive in ratio to dicyclopentadiene, or with cyclopentadiene oligomers additive in the form of trimers and tetramers mixture in the amount of 5-65 wt.% of dicyclopentadiene, or with such modifiers being esters of dibasic carboxylic acids, primarily, dibutylphthalate and dioctylphthalate in the amount of 5-25 wt.% of dicyclopentadiene, or with such modifiers being alkyl-phenols selected from group: pentaerythritol tetrakis-(3,5-di-tert-butyl-4-hydroxy-cinnamate), 4,4-methylene bis (2,6-di-tert-butyl-phenol), octadecyl 3-(3,5-di-tert-butyl-4-hydroxy-phenyl)proprionate taken in the amount of 1-5 wt.% of dicyclopentadiene, or with such modifiers being used as simultaneous introduction of the following combinations selected from the group: cyclo-olefin and/or cyclo-olefins with alkyl-phenol; cyclo-olefin with an ester of dibasic carboxylic acid and alkyl-phenol; ester of dibasic carboxylic acid with alkyl-phenol, with cyclo-olefin being selected from the group: cyclo -pentene, cyclo-octene, cyclo-octadiene, norbornene, norbornadiene in the amount of 5-50 wt.% of dicyclopentadiene; alkyl-phenol being selected from the group: pentaerythritol tetrakis- (3,5-di-tert-butyl-4-hydroxy-cinnamate, 4,4-methylene bis (2,6-di-tert-butyl-phenol), octadecyl 3-(3,5-di-tert-butyl -4- hydroxy-phenyl)propionate, in the amount of 1-5 wt.% of dicyclopentadiene, and an ester of dibasic carboxylic acid and alkyl-phenol being selected from the group: dibutilphthalate and dioctylphthalate in the amount of 5-25 wt.% of dicyclopentadiene.

## Patentansprüche

1. Verfahren zur Herstellung von Polymermaterialien auf der Basis von Polydicyclopentadien umfassend eine Lösung eines Katalysators in Dicyclopentadien, Einführen von modifizierenden Additiven in die Lösung, und Polymerisierung des Reaktionsgemisches, wobei Verbindungen mit der folgenden allgemeinen Formel als Katalysator verwendet werden: 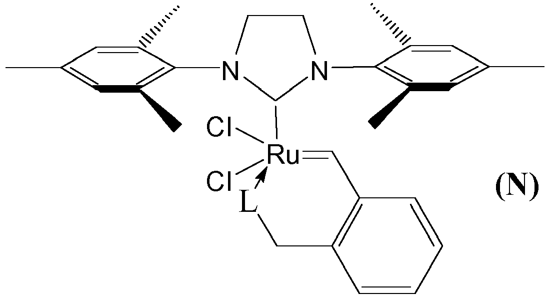 wobei L ein Substituent ausgewählt aus der folgenden Gruppe ist: 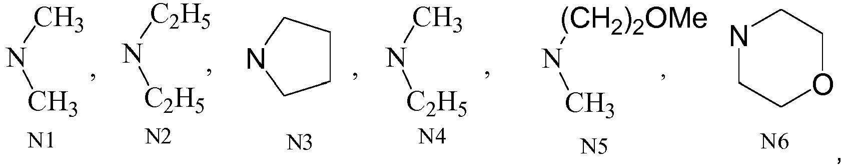 mit Dicyclopentadien, das mit den Katalysatoren bei Molverhältnissen von Katalysator-/Dicyclopentadien von 1:70000 bis 1:1000000 vermischt ist, und die Polymerisierung durch Erhitzen des Reaktionsgemisches von 30°C auf 200°C durchgeführt wird, wobei die modifizierenden Additive eines oder eine Kombination aus mehreren Cyclo-Olefin-Co-Monomeren sind, die aus der folgenden Gruppe ausgewählt sind: Cyclo-Penten, Cyclo-Octen, Cyclo-Octadien, Norbornen, Norbornadien, in der Menge von 5-50 Gew.-% modifizierenden Additivs in Verhältnis zum Dicyclopentadien, oder mit Cyclopentadien-Oligomeren-Additiv in Form von Trimeren- und Tetramerenmischung in der Menge von 5-65 Gew.-% von Dicyclopentadien, oder mit solchen Modifikatoren, die Ester von dibasischen Carbonsäuren, im Wesentlichen, Dibutylphthalat und Dioctylphthalat in der Menge von 5-25 Gew.-% von Dicyclopentadien sind, oder mit solchen Modifikatoren, die Alkyl-Phenole sind, die ausgewählt sind aus der Gruppe: Pentaerythritol-Tetrakis-(3,5-Di-Tert-Butyl-4-Hydroxy-Cinnamat, 4,4-Methylen-Bis-(2,6-Di-Tert-Butyl-Phenol), Octadecyl-3-(3,5-Di-Tert-Butyl-4-Hydroxy-Phenyl)Propionat genonnem in der Menge von 1-5 Gew.-% von Dicyclopentadien, oder mit solchen Modifikatoren, die als ein gleichzeitiges Einführen der folgenden Kombinationen verwendet werden, die ausgewählt sind aus der Gruppe: Cyclo-Olefin und/oder Cyclo-Olefine mit Alkyl-Phenol; Cyclo-Olefin mit einem Ester von dibasischer Carbonsäure und Alkyl-Phenol; Ester von dibasischer Carbonsäure mit Alkyl-Phenol, wobei das Cyclo-Olefin ausgewählt ist aus der Gruppe: Cyclo-Penten, Cyclo-Octen, Cyclo-Octadien, Norbornen, Norbornadien in der Menge von 5-50 Gew.-% von Dicyclopentadien; Alkyl-Phenol ausgewählt aus der Gruppe: Pentaerythritol-Tetrakis-(3,5-Di-Tert-Butyl-4-Hydroxy-Cinnamat, 4,4-Methylen-bis-(2,6-Di-Tert-Butyl-Phenol), Octadecyl-3-(3,5-Di-Tert-Butyl-4-Hydroxy-Phenyl)Propionat, in der Menge von 1-5 Gew.-% von Dicyclopentadien, und ein Ester von dibasischer Carbonsäure und Alkyl-Phenol ausgewählt aus der Gruppe: Dibutilphthalat und Dioctylphthalat in der Menge von 5-25 Gew.-% von Dicyclopentadien.

## Revendications

1. Procédé de préparation de matériaux polymères sur la base de polydicy-clopentadiène, comprenant la solution d'un catalyseur en dicyclopentadiène, l'introduction d'additifs modificateurs dans la solution, et la polymérisation du mélange réactionnel, dans lequel les composés de formule générale suivante sont utilisés en tant que catalyseur : 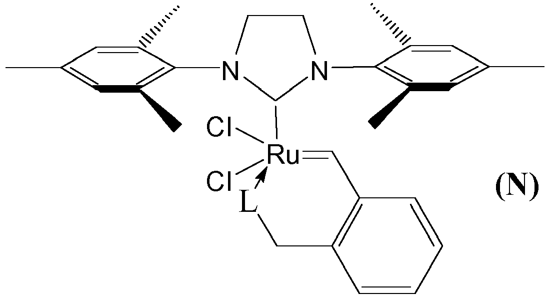 où L est un substituant choisi dans le groupe suivant : 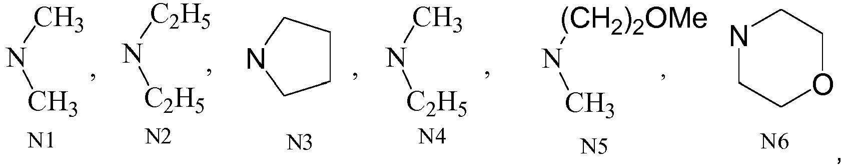 avec du dicyclopentadiène mélangé avec les catalyseurs à des rapports molaires catalyseur / dicyclopentadiène de 1:70000 à 1:1000000, et la polymérisation est réalisée par le réchauffement du mélange réactionnel de 30°C jusqu'à 200°C, avec des additifs modificateurs étant un ou une combinaison de plusieurs comonomères cyclo-oléfiniques choisis dans le groupe : cyclo-pentène, cyclo-octène, cyclo-octadiène, norbornène, norbornadiène, dans la quantité de 5-50% en poids d'additif modificateur par rapport à dicyclopentadiène, ou avec des additifs d'oligomères de cyclopentadiène dans la forme d'un mélange de trimères et tétramères dans une quantité de 5-65% en poids de dicyclopentadiène, ou avec de tels modificateurs étant des esters d'acides carboxyliques dibasiques, principalement du dibutphtalate et du dioctylphtalate dans la quantité de 5-25% en poids de dicyclopentadiène, ou avec de tels modificateurs étant des alkyl-phénols choisis dans le groupe : pentaérythritol tétrakis-(3,5-di-tert-butyle-4-hydroxy-cinnamate), 4,4-méthylène bis (2,6-di-tert-butyle-phénol), 3-(3,5-di-tert-butyl-4-hydroxy-phényle)propionate d'octadécyle pris dans la quantité de 1-5% en poids de dicyclopentadiène, ou avec de tels modificateurs étant utilisés en tant qu'introduction simultanée des combinaisons suivantes choisies dans le groupe : cyclo-oléfine et / ou cyclo-oléfines avec alkyl-phénol ; cyclo-oléfine avec un ester d'acide carboxylique dibasique et d'alkyl-phénol ; ester d'acide carboxylique dibasique avec alkyl-phénol, la cyclo-oléfine étant choisie dans le groupe : cyclo-pentène, cyclo-octène, cyclo-octadiène, norbornène, norbornadiène dans la quantité de 5-50% en poids de dicyclopentadiène ; alkyl-phénol étant choisi dans le groupe : pentaérythritol tétrakis-(3,5-di-tert-butyl-4-hydroxy-cinnamate), 4,4-méthylène bis (2,6-di-tert-butyle-phénol), 3-(3,5-di-tert-butyle-4-hydroxy-phényle)propionate d'octadécyle, dans la quantité de 1-5% en poids de dicyclopentadiène, et un ester d'acide carboxylique dibasique et alkyl-phénol étant choisi dans le groupe : dibutilphthalate et dioctylphthalate dans la quantité de 5-25% en poids de dicyclopentadiène.
